# FASCICULE DE BREVET EUROPEEN

(11) **EP 2 081 797 B1**
(45) Date de publication et mention de la délivrance du brevet: **23.12.2015**
(21) Numéro de dépôt: 07822550.5
(22) Date de dépôt: 13.11.2007
(51) Int. Cl.: B60R 19/18, B60R 21/34, B60R 19/12

(54) **BOUCLIER DE PROTECTION CONTRE LES CHOCS POUR FACE AVANT DE VEHICULE AUTOMOBILE ET MODULE DE FACE AVANT COMPORTANT UN TEL BOUCLIER**
ABDECKUNG ZUM SCHUTZ GEGEN AUFPRALL AUF DER FRONTPLATTE EINES KRAFTFAHRZEUGS UND SOLCH EINE ABDECKUNG UMFASSENDES FRONTPLATTENMODUL
SHIELD FOR PROTECTION AGAINST IMPACTS ON THE FRONT PANEL OF A MOTOR VEHICLE, AND FRONT PANEL MODULE COMPRISING SUCH A SHIELD

(30) Priorité: 20.11.2006 FR 0610131
(43) Date de publication de la demande: 29.07.2009
(73) Titulaire: VALEO SYSTEMES THERMIQUES, 78321 Le Mesnil St Denis Cedex (FR)
(72) Inventeur: GUINEHUT, Sébastien, 92130 Issy-Les-Moulineaux (FR); SALIN, Laurent, 75015 Paris (FR); HARAND, Pascal, 92150 Suresnes (FR)
(74) Mandataire: Metz, Gaëlle
(86) Numéro de dépôt international: PCT/EP2007/062281
(87) Numéro de publication internationale: WO 2008/061917

(56) Documents cités:
- EP-A- 1 293 389
- EP-A1- 1 067 039
- WO-A-2004/106117
- WO-A-2005/100100
- WO-A-2007/074300
- FR-A- 2 880 319
- US-A1- 2004 094 977

## Description

La présente invention concerne un bouclier de protection contre les chocs pour un module de face avant de véhicule automobile. Un tel bouclier est connu du document EP1293389.

Un module de face avant est un élément structurel susceptible d'intégrer divers équipements du véhicule, tels que projecteurs, clignotants, avertisseur sonore, échangeur thermique ou module de refroidissement complet, etc..

Aujourd'hui, les véhicules se doivent de tenir compte également de la protection des piétons en cas de collision avec un véhicule (directive européenne 2003/102/CE) et plus particulièrement de la protection des jambes et de la hanche des piétons.

Les constructeurs automobiles se doivent de limiter l'accélération, la rotation, le cisaillement, la force à l'impact et le moment de flexion reçus par la jambe ou la hanche d'un piéton.

Un module de face avant comprend des poutres utilisées principalement pour absorber les chocs frontaux afin de protéger un piéton ainsi que les équipements du véhicule. Les chocs sont classés en trois catégories dans les normes européennes. On distingue les chocs dits « chocs petite vitesse », pour une vitesse comprise entre 2,5 et 4 km/h, les "chocs moyenne vitesse", pour une vitesse d'environ 16 km/h et les "chocs grande vitesse", pour une vitesse comprise entre 56 et 65 km/h.

Un module de face avant est composé d'éléments structurels désignés armatures et/ou poutres. Afin d'améliorer l'absorption des chocs, il a été proposé de recouvrir les armatures d'absorbeurs de chocs. Un absorbeur est prévu pour se déformer en cas de choc avec un piéton et ainsi absorber l'énergie du choc au bénéfice du piéton et des éléments mécaniques du véhicule situés derrière le module.

Le document FR2880319 enseigne un tel module de face avant dissociant les éléments structurels du module des éléments absorbeurs de chocs.

Lors de la fabrication du module de face avant, les armatures sont fixées entres elles pour former un squelette, le squelette étant ensuite recouvert par les éléments absorbeurs. Deux étapes de montage sont nécessaires, une étape pour la fixation de l'armature et une étape pour la fixation de l'élément absorbeur correspondant. En bref, le module de face avant de la demande de brevet FR2880319 est de mise en oeuvre assez lourde.

La structure des éléments absorbeurs n'est pas autoporteuse et ne permet pas de connecter plusieurs absorbeurs ensemble pour former un module, une armature étant nécessaire pour disposer l'élément absorbeur.

De plus, les éléments absorbeurs disposés sur les armatures peuvent perturber l'alimentation en air des échangeurs thermiques servant à refroidir le moteur, ce qui entraîne une baisse du rendement des échangeurs.

C'est pourquoi, la demanderesse a cherché à développer un nouveau type de module de face avant permettant de pallier au moins certains de ces inconvénients.

Ainsi, l'invention concerne un bouclier de protection contre les chocs pour face avant de véhicule automobile comportant une poutre piéton de résistance aux chocs, la poutre piéton étant constituée d'une structure d'absorption de chocs agencée pour se déformer sous effort tout en assurant au moins en partie la résistance de la poutre.

Les éléments structurels de la poutre et les éléments absorbeurs de chocs sont intégrés dans la poutre piéton, la poutre piéton participant aussi bien à la résistance qu'à l'absorption des chocs. Cette conception tout en un est donc particulièrement adaptée à un processus industriel.

La structure absorbante pourra comporter un insert métallique de renfort.

L'insert métallique permet avantageusement de rigidifier la structure absorbante.

De préférence, la structure d'absorption est cellulaire.

De préférence encore, les cellules comprennent des cloisons d'épaisseur variable.

De préférence toujours, au moins une cellule est remplie d'un matériau absorbeur de chocs.

L'augmentation de l'épaisseur des cloisons de certaines cellules du bouclier et l'ajout d'un matériau absorbant à l'intérieur d'une cellule permettent avantageusement de rigidifier des zones du bouclier.

De préférence, le bouclier comprend des jambages, un absorbeur de chocs pour poutre pare-chocs et la poutre piéton, l'ensemble étant monobloc.

De préférence, le bouclier comprend au moins deux zones de protection de structures d'absorption respectives adaptées pour favoriser l'absorption des chocs et la résistance aux chocs, respectivement.

Selon le module de face avant à réaliser, le bouclier de protection est divisé en zones de protection favorisant soit l'absorption des chocs, soit la résistance aux chocs, permettant ainsi de protéger plus efficacement les équipements du véhicule tout en protégeant le piéton.

L'invention concerne également un module de face avant de véhicule automobile comprenant un bouclier selon l'invention.

L'invention sera mieux comprise à l'aide de la description suivante en référence au dessin annexé sur lequel :
La figure 1 représente une vue en perspective d'une face avant selon l'art antérieur ;
La figure 2 représente une vue en perspective avant du bouclier de protection de l'invention ;
La figure 3 représente une vue en perspective arrière du bouclier de protection de la figure 2 ;
La figure 4 représente une vue en coupe des canaux de la structure d'absorption du bouclier de la présente invention, et
La figure 5 représente une vue de coté d'un bouclier de protection de l'invention.

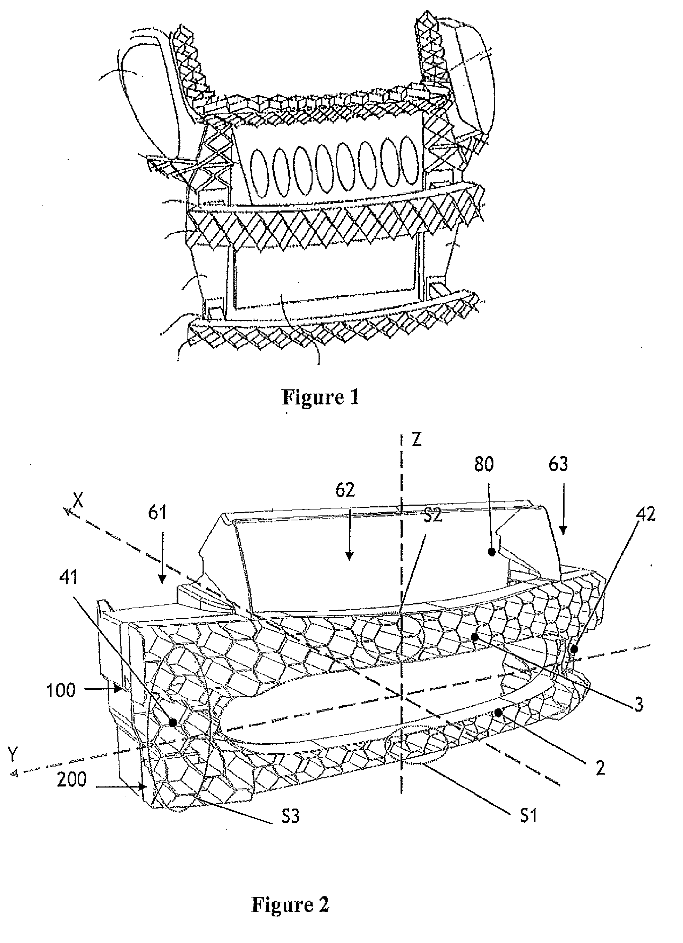

En référence à la figure 2, le bouclier de protection 1 pour un module de face avant de véhicule automobile comprend une poutre piéton 2 pour résister aux chocs sur une voie basse 200 en cas de contact avec un piéton, un absorbeur de chocs pour poutre pare-chocs 3 pour résister aux chocs sur une voie haute 100 et des jambages 41,42 pour résister aux chocs latéraux, les jambages 41,42 participant également à la résistance aux chocs frontaux sur la voie basse.

La poutre piéton 2 et l'absorbeur pare-chocs 3 sont disposés parallèlement l'un à l'autre, selon un axe Y, sur un module de face avant non représenté. Les jambages 41,42 s'étendent perpendiculairement à la poutre piéton 2 et à l'absorbeur pare-chocs 3 selon un axe Z et relient les extrémités de la poutre piéton 2 aux extrémités de l'absorbeur pare-chocs 3. L'ensemble comprenant des jambages 41,42, la poutre piéton 2 et l'absorbeur pare-chocs 3 forment un bouclier 1 monobloc prêt à monter sur le module de face avant.

Pour un bouclier 1 monobloc constitué d'une structure d'absorption de chocs (S1), tel que représenté dans la forme de réalisation de la figure 2, la poutre piéton 2, l'absorbeur pare-chocs 3 et les jambages 41, 42 participent à absorber tous types de chocs.

La face externe 11 du bouclier 1, constituée en structure d'absorption de chocs, permet d'éviter les dommages sérieux. L'énergie liée à un choc latéral sur un jambage 41 est transmise à la poutre piéton 2 et à l'absorbeur pare-chocs 3, pour être absorbée de manière globale.

La structure de la poutre 2 est autoporteuse et ne nécessite pas d'armatures dédiées pour assurer sa stabilité.

La structure d'absorption de chocs de la poutre piéton 2 est ici formée de cellules se présentant sous la forme de canaux 20 sensiblement parallèles s'étendant orthogonalement par rapport à la poutre piéton 2 et aux jambages 41,42 selon un axe X.

On pourra ainsi ajouter aux cellules un insert métallique de renfort s'étendant selon l'axe Y pour renforcer la structure. L'insert est inséré dans la poutre 2 ou moulé avec celle-ci. Il définit, par exemple, un noyau prévu localement à travers les cellules.

La matière formant les cellules de la structure d'absorption de chocs est ici réalisé en un matériau plastique et plus particulièrement un copolymère de polypropylène renforcé avec 10% de talc et d'élastomère modifié désigné PP-EPDM.

Les canaux 20 forment une structure d'absorption (S1) capable de renforcer structurellement la poutre 2 et d'absorber les chocs. La poutre piéton 2, l'absorbeur pare-chocs 3 et les jambages 41, 42 sont également formés de cellules se présentant sous la forme de canaux 20 mais une architecture lamellaire pourrait également convenir.

Dans cette forme de réalisation, les canaux 20 ne sont pas identiques, les canaux variant selon leur emplacement dans le bouclier de protection 1.

On entend par variation des canaux 20, une variation du motif de la section (polygonal, circulaire, etc.) ou une variation de l'épaisseur des cloison 21 des canaux 20.

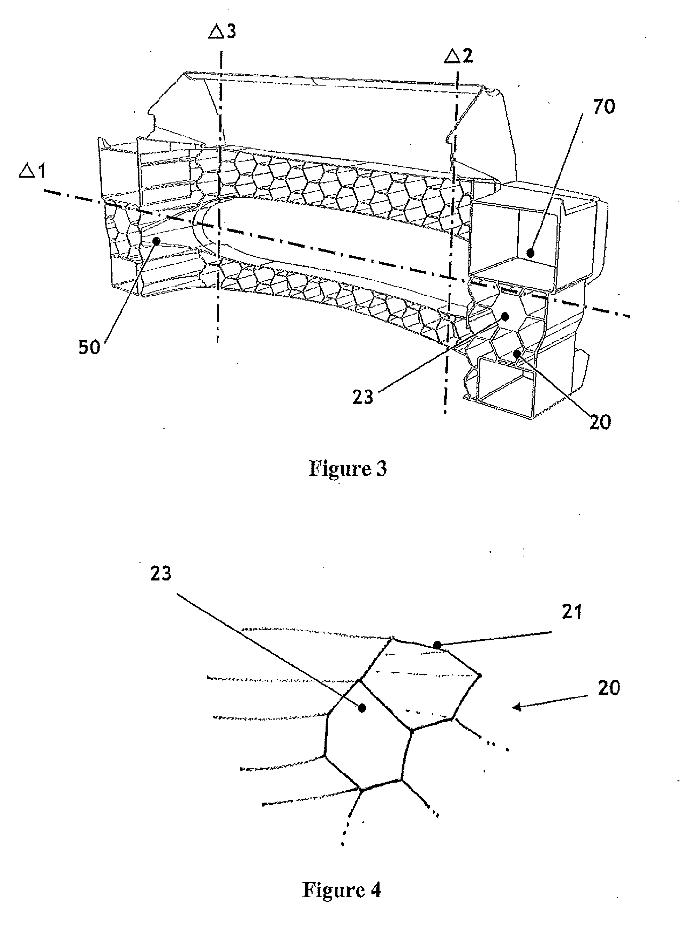

Les canaux 20 ont ici une section hexagonale régulière, cependant une section circulaire, ovale ou polygonale régulière ou irrégulière pourrait aussi bien convenir, les canaux 20 pouvant être regroupés pour former une structure en nid d'abeilles comme représentée sur la figure 4.

Pour un canal pris individuellement, l'épaisseur des cloisons 21 du canal peut varier sur la longueur du canal uniformément ou non uniformément, la taille des cellules pouvant également varier. De même, un canal peut-être rempli, complètement ou partiellement, d'une matière participant à absorber les chocs ou à augmenter la raideur du bouclier 1. En référence à la figure 3, un canal sur le jambage 41 est rempli, par exemple, d'une matière polymère 23 afin de rigidifier le jambage 41.

Dans une autre forme de réalisation, les canaux 20 peuvent être également regroupés en faisceaux, les faisceaux étant entourés par une cloison d'enveloppement.

Les variations des canaux 20 sur le bouclier 1, l'insertion d'un matériau absorbeur de chocs dans les canaux 20 et le regroupement des canaux 20 en faisceau permettent de définir différentes zones de protection contre les chocs et ainsi d'adapter la résistance et l'absorption souhaitée selon le module de face avant que l'on cherche à réaliser.

De par la variété des véhicules et plus particulièrement de par leurs différences au niveau de la hauteur et de la largeur de leur châssis, le bouclier de protection doit pouvoir être adapté pour résister aux chocs frontaux et latéraux de manière optimale.

Le bouclier de protection 1 peut ainsi être divisé en différentes zones de protection.

Un mode de réalisation propose que la section des cellules de la structure d'absorption d'une zone de protection soit différente pour chaque zone de protection.

En référence à la figure 2, le bouclier 1 est divisé dans sa hauteur entre sa voie haute 200 et sa voie basse 100 par un axe horizontal (Δ1) et dans sa longueur par des axes verticaux (Δ2, Δ3) pour définir une zone latérale droite 63, une zone latérale gauche 61 et une zone centrale 62. Le bouclier 1 est ainsi divisé en six zones de protection de structure d'absorption différentes (S1, S2, S3).

Pour chaque zone de protection, la taille des cellules de la structure absorbante de la zone de protection peut varier afin d'absorber de manière différente les chocs.

En référence à la figure 2, la section des canaux 20 est plus importante au niveau des zones latérales 61,63 qu'au niveau de la zone centrale 62 ce qui permet d'augmenter la raideur sur la zone centrale 62 tout en conservant une bonne absorption des chocs sur les zones latérales 61, 63.

Selon un mode de réalisation non représenté, la section des cellules de la partie centrale 62 est plus grande que la section des cellules des zones latérales 61 et 62.

De même, la section des canaux 20 au niveau de la voie basse 200 est inférieure à la section des canaux 20 au niveau de la voie haute 100.

Cette configuration des canaux 20 permet de transmettre de manière efficace les chocs à l'ensemble du bouclier 1 pour mieux les absorber et ainsi obtenir une déformation optimale de la jambe sur tout ou partie du véhicule.

Cette division du bouclier 1 en différentes zones est uniquement citée à titre d'exemple, une division basée sur la forme, le profil du bouclier ou l'agencement des équipements du module de face avant ou du véhicule pourrait également convenir.

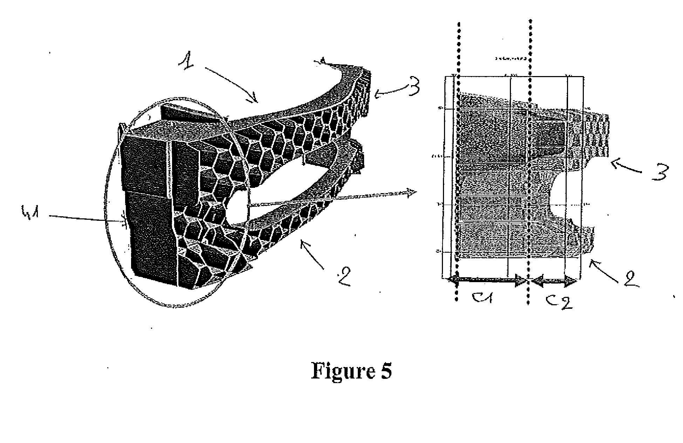

De même, on pourrait différencier en zones de protection distinctes, la face interne 12 de la face externe 11 du bouclier 1. Dans une forme de réalisation représentée à la figure 5, le bouclier 1 comprend au moins dans la zone d'absorption S3 qui correspond au jambage 41 du bouclier de protection, des couches de cellules, ici deux couches C1 et C2, disposées parallèlement au plan formé par les axes orthogonaux Y et Z. Autrement dit, la couche de cellules C1 est située sous la couche de cellule C2. Les deux couches de cellules C1 et C2 permettent de définir deux zones d'absorption de chocs comportant des niveaux d'absorption d'énergie différents. Ici, la couche C1 participe à l'absorption des chocs dits réparabilité et la couche C2 participe principalement à l'absorption des chocs dits piéton et auxiliairement aux chocs réparabilité.

Ainsi, la couche C1 absorbera au minimum 80 % de l'énergie libérée lors d'un choc. De manière analogue, la couche C2 absorbera au maximum 20% de l'énergie libérée lors d'un choc.

Les couches de cellules peuvent avoir un motif identique ou différent.

En référence à la figure 3, des nervures de renfort 50 sont disposées sur la face interne 12 du bouclier 1 au niveau des jambages latéraux 41, 42. Les nervures 50 sont ici constituées de cloisons 21 reliant les canaux 20 des jambages 41, 42 aux canaux de la poutre piéton 2 et de l'absorbeur pare-chocs 3 afin de les solidariser et de rigidifier le bouclier 1. Ainsi, en cas de choc, une énergie plus importante est absorbée.

En référence à la figure 3, la partie arrière du bouclier 1 comprend des logements 70 pour des absorbeurs de chocs disposés aux extrémités des longerons du châssis du véhicule, ces absorbeurs étant communément désignés « absorbeurs de chocs assurance ». Ces absorbeurs de chocs assurance absorbent en dernier recours l'énergie du choc après une déformation maximale des canaux 20 afin d'éviter d'endommager les longerons sur lesquels les absorbeurs de chocs assurance sont montés et de protéger des échangeurs thermiques.

En référence aux figures 2 et 3, le bouclier 1 comporte des éléments 80 pour la déviation du flux d'air communément désignés « convergents ».

Lors de son utilisation, le bouclier 1 est monté sur le module de face avant, le module étant ensuite monté sur le véhicule entre les équipement du véhicule et la carrosserie. Le module de face avant réalisé permet de protéger efficacement les équipements du véhicule.

Le convergent 80 est ici monté sur la partie supérieure de l'absorbeur pare-chocs 3 et fixé à ses extrémités au niveau de la partie supérieure des jambages 41, 42.

Le bouclier 1 est ici moulé d'une seule pièce mais il est également possible de concevoir un bouclier 1 monobloc sous forme de modules fixés les uns aux autres, un bouclier 1 modulaire étant plus simple à conditionné qu'un bouclier 1 moulé d'une seule pièce. Les modules du bouclier 1 comprennent des moyens de fixation se présentant sous la forme de clips, de languettes, de colle ou d'autres moyens équivalents.

Le bouclier 1 modulaire ainsi assemblé résiste aux chocs tel un bouclier moulé en une seule pièce.

## Revendications

1. Bouclier (1) de protection contre les chocs pour face avant de véhicule automobile comportant :
- une poutre piéton (2) de résistance aux chocs, la poutre piéton (2) étant constituée d'une structure d'absorption de chocs (S1) agencée pour se déformer sous effort tout en assurant au moins en partie la résistance de la poutre,
- un absorbeur de chocs pour poutre pare-chocs (3) disposés parallèlement à ladite poutre piéton (2) et dans lequel
- des jambages (41,42) s'étendant perpendiculairement à la poutre piéton (2 et à l'absorbeur de chocs pour poutre pare-chocs (3) et reliant les extrémités de la poutre piéton (2) aux extrémités de l'absorbeur (3)
ledit bouclier (1) comprend au moins dans la zone d'absorption (S3) correspondant aux jambages au moins deux couches de cellules disposées parallèlement au plan Y et Z permettant de définir deux zones d'absorption de chocs comportant des niveaux d'absorption d'énergie différents.

2. Bouclier selon la revendication 1, comportant une face externe (11) agencée pour recevoir les chocs et constituée en structure d'absorption de chocs (S1).

3. Bouclier selon l'une des revendications 1 ou 2, dans lequel la structure d'absorption de chocs (S1) est cellulaire.

4. Bouclier selon l'une des revendications précédentes, dans lequel les cellules comprennent des cloisons (21) d'épaisseur variable.

5. Bouclier selon l'une des revendications précédentes, dans lequel l'intérieur d'au moins une cellule est rempli d'un matériau absorbeur de chocs (23).

6. Bouclier selon l'une des revendications précédentes, dans lequel la structure d'absorption de choc (S1) comprend des canaux (20) groupés en faisceaux.

7. Bouclier selon l'une des revendications précédentes, comprenant des jambages (41, 42), un absorbeur de chocs pour poutre pare-chocs (3) et la poutre piéton (2), l'ensemble étant monobloc.

8. Bouclier selon l'une des revendications précédentes, dans lequel la structure absorbante (S1) comporte un insert métallique de renfort.

9. Bouclier selon l'une des revendications précédentes, comprenant des modules de bouclier fixés les uns aux autres.

10. Bouclier selon l'une des revendications précédentes, comprenant au moins deux zones de protection de structures d'absorption respectives adaptées pour favoriser l'absorption des chocs et la résistance aux chocs, respectivement.

11. Bouclier selon la revendication précédente, dans lequel la taille des cellules de la structure d'absorption d'une zone de protection est différente pour chaque zone de protection.

12. Bouclier selon les revendication 10 et 11, comprenant une zone de protection au niveau d'une voie haute (100) et une zone de protection au niveau d'une voie basse (200) du module de face avant de véhicule.

13. Bouclier selon l'une des revendications 10 à 12, comprenant une zone de protection au niveau d'une zone centrale (62) et des zones de protection au niveau des zones latérales (61, 63) du bouclier (1).

14. Module de face avant de véhicule automobile comprenant un bouclier (1) selon l'une des revendications 1 à 13.

## Patentansprüche

1. Abdeckung (1) zum Schutz gegen Aufprall auf der Frontplatte eine Kraftfahrzeugs, umfassend:
- einen aufprallbeständigen Fußgängerbalken (2), wobei der Fußgängerbalken (2) aus einer Stoßdämpferstruktur (S1) besteht, die derart vorgesehen ist, dass sie sich unter einer Krafteinwirkung verformt, wobei sie gleichzeitig zumindest teilweise die Beständigkeit des Balkens gewährleistet,
- einen Stoßaufnehmer für Stoßdämpferträger (3), die parallel zu dem Fußgängerbalken (2) angeordnet sind, und wobei
- sich die Stützbeine (41, 42) senkrecht auf den Fußgängerbalken (2) und den Stoßaufnehmer für Stoßdämpferträger (3) erstrecken und die Enden des Fußgängerbalkens (2) mit den Enden des Aufnehmers (3) verbinden,
wobei die Abdeckung (1) zumindest in der Aufnahmezone (S3) entsprechend den Stützbeinen mindestens zwei Schichten von Zellen umfasst, die parallel zu der Y- und Z-Ebene angeordnet sind und es ermöglichen, zwei Stoßaufnahmezonen zu definieren, die unterschiedliche Energieaufnahmeniveaus umfassen.

2. Abdeckung nach Anspruch 1, umfassend eine Außenseite (11), die derart vorgesehen ist, dass sie die Stöße aufnimmt, und die von einer Stoßdämpferstruktur (S1) gebildet ist.

3. Abdeckung nach einem der Ansprüche 1 oder 2, bei der die Stoßdämpferstruktur (S1) zellulär ist.

4. Abdeckung nach einem der vorhergehenden Ansprüche, bei der die Zellen Trennwände (21) mit variabler Dicke umfassen.

5. Abdeckung nach einem der vorhergehenden Ansprüche, bei der das Innere mindestens einer Zelle mit einem stoßdämpfenden Material (23) gefüllt ist.

6. Abdeckung nach einem der vorhergehenden Ansprüche, bei der die Stoßdämpferstruktur (S1) zu Bündeln zusammengefasste Kanäle (20) umfasst.

7. Abdeckung nach einem der vorhergehenden Ansprüche, umfassend Stützbeine (41, 42), einen Stoßaufnehmer für Stoßdämpferträger (3) und den Fußgängerbalken (2), wobei die Einheit einstückig ist.

8. Abdeckung nach einem der vorhergehenden Ansprüche, bei der die Stoßdämpferstruktur (S1) einen metallischen Verstärkungseinsatz umfasst.

9. Abdeckung nach einem der vorhergehenden Ansprüche, umfassend Abdeckungsmodule, die aneinander befestigt sind.

10. Abdeckung nach einem der vorhergehenden Ansprüche, umfassend mindestens zwei Schutzzonen von jeweiligen Stoßdämpferstrukturen, die dazu vorgesehen sind, die Aufnahme der Stöße bzw. die Stoßbeständigkeit zu begünstigen.

11. Abdeckung nach dem vorhergehenden Anspruch, bei der die Größe der Zellen der Stoßdämpferstruktur einer Schutzzone für jede Schutzzone unterschiedlich ist.

12. Abdeckung nach den Ansprüchen 10 und 11, umfassend eine obere Schutzzone (100) und eine untere Schutzzone (200) des Frontplattenmoduls des Fahrzeugs.

13. Abdeckung nach einem der Ansprüche 10 bis 12, umfassend eine Schutzzone im Bereich einer mittleren Zone (62) und Schutzzonen im Bereich der seitlichen Zonen (61, 63) der Abdeckung (1).

14. Frontplattenmodul eines Kraftfahrzeugs, umfassend eine Abdeckung (1) nach einem der Ansprüche 1 bis 13.

## Claims

1. Impact-protection shield (1) for a motor vehicle front end, comprising:
- an impact-resistant pedestrian beam (2), the pedestrian beam (2) being formed by an impact-absorbing structure (S1) designed to deform under force while at least partially ensuring the resistance of the beam,
- a bumper beam impact absorber (3) arranged parallel to the said pedestrian beam (2) and in which
- struts (41, 42) extend perpendicularly to the pedestrian beam (2) and to the bumper beam impact absorber (3) and connect the ends of the pedestrian beam (2) to the ends of the absorber (3),
the said shield (1) comprising, at least in the absorption zone (S3) corresponding to the struts, at least two layers of cells arranged parallel to the plane Y and Z making it possible to define two impact-absorbing zones comprising different energy-absorbing levels.

2. Shield according to Claim 1, comprising an external face (11) designed to receive the impact and formed as an impact-absorbing structure (S1).

3. Shield according to either of Claims 1 and 2, in which the impact-absorbing structure (S1) is cellular.

4. Shield according to one of the preceding claims, in which the cells comprise partitions (21) of variable thickness.

5. Shield according to one of the preceding claims, in which the interior of at least one cell is filled with an impact-absorbing material (23).

6. Shield according to one of the preceding claims, in which the impact-absorbing structure (S1) comprises channels (20) grouped into bundles.

7. Shield according to one of the preceding claims, comprising struts (41, 42), a bumper beam impact absorber (3) and the pedestrian beam (2), the assembly being in one piece.

8. Shield according to one of the preceding claims, in which the absorbing structure (S1) comprises a metal reinforcing insert.

9. Shield according to one of the preceding claims, comprising shield modules fixed to one another.

10. Shield according to one of the preceding claims, comprising at least two zones for the protection of respective absorption structures adapted to promote the absorption of impacts and the resistance to impact, respectively.

11. Shield according to the preceding claim, in which the size of the cells of the absorption structure of a protection zone is different for each protection zone.

12. Shield according to Claims 10 and 11, comprising a protection zone at an upper portion (100) and a protection zone at a lower portion (200) of the vehicle front end module.

13. Shield according to one of Claims 10 to 12, comprising a protection zone at a central zone (62) and protection zones at lateral zones (61, 63) of the shield (1).

14. Motor vehicle front end module comprising a shield (1) according to one of Claims 1 to 13.
